(19)

**Europäisches Patentamt**

**European Patent Office**

**Office européen des brevets**

(11) **EP 3 441 721 A1**

(12) **EUROPEAN PATENT APPLICATION**

(43) Date of publication:
**13.02.2019 Bulletin 2019/07**

(51) Int Cl.:
***G01C 21/20*** *(2006.01)*

(21) Application number: **18181797.4**

(22) Date of filing: **05.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2017 CN 201710594851**

(71) Applicant: **Robert Bosch GmbH 70442 Stuttgart (DE)**

(72) Inventors:
- **ZENG, Zhuoqi Shanghai (CN)**
- **YU, Huajun Shanghai (CN)**
- **WANG, Wei Shanghai, 200335 (CN)**

(54) **METHOD, APPARATUS AND STORAGE MEDIA FOR DETERMINING POSITION FOR A WALKER**

(57)   The present invention relates to the field of measurement, in particular to a method for determining pedestrian position, and an apparatus and storage medium for realizing the method. A method for determining pedestrian position information according to an embodiment of the present invention includes the following steps: acquiring a step length measurement value and a travel direction measurement value of one or more footsteps of a pedestrian; and determining position information of the pedestrian from the step length measurement value and the travel direction measurement value, wherein the step length measurement value of each footstep is provided by a signal receiver and a signal emitter, which form a pair and are disposed on different lower limbs of the pedestrian, and the travel direction measurement value is provided by an inertial measurement unit.

**4A**

**Description**

Technical field

The present invention relates to the field of measurement, in particular to a method for determining pedestrian position, and an apparatus and storage medium for realizing the method.

Background art

Pedestrian Dead Reckoning (PDR) measures and counts the number of steps, step lengths and travel directions of a pedestrian when walking, and thereby calculates information such as a walking track and position of the pedestrian.
In a PDR method using an inertial measurement unit (IMU), the step lengths and number of steps of the pedestrian can be calculated on the basis of acceleration information, and a gyroscope or magnetic field sensor can be used to estimate the travel direction, thereby determining the position or movement track of the pedestrian. However, such a method is hampered by the so-called "drift problem" (caused by deviation in acceleration measurements), so positioning precision is poor.
Another PDR method is based on ultra wide band (UWB) technology, measuring distance and performing positioning by means of time differences of received signals, wherein a signal receiver is generally installed in a fixed position, and a moving object is equipped with a signal emitter (e.g. a wireless signal emitting tag). However, the shortcomings of UWB positioning are also obvious. For example, in an indoor environment, due to blocking by obstacles, the signal receiver might be unable to receive a signal sent by the moving object, and this will result in failure of positioning. In addition, this type of positioning technology must obtain the position of the signal receiver in advance, but in certain situations, the signal receiver will become unusable (e.g. the signal receiver is damaged due to fire).
Clearly, it will be a huge challenge for the industry to provide a PDR method that is capable of achieving satisfactory standards in terms of cost, precision and reliability amongst other things, and there is an urgent need for such a technical solution in the market.

Content of the invention

An object of the present invention is to provide a method for determining pedestrian position information, having advantages such as high precision, low implementation costs and high reliability.
A method for determining pedestrian position information according to one embodiment of the present invention includes the following steps:

    acquiring a step length measurement value and a travel direction measurement value of one or more footsteps of a pedestrian; and
    determining position information of the pedestrian from the step length measurement value and the travel direction measurement value,
    wherein the step length measurement value of each footstep is provided by a signal receiver and a signal emitter, which form a pair and are disposed on different lower limbs of the pedestrian, and the travel direction measurement value is provided by an inertial measurement unit.

Preferably, in the method, the signal receiver, the signal emitter and the inertial measurement unit are disposed on feet of the pedestrian.
Preferably, in the method, the position information comprises a position and/or a walking track of the pedestrian.
Preferably, in the method, a position of the pedestrian is determined according to the following formulae:

$$x = \sum_{i=1}^{n} \Delta r_i * cos\theta_i$$

$$y = \sum_{i=1}^{n} \Delta r_i * sin\theta_i$$

$$\Delta r_i = \sqrt{\Delta r_{fh,i}{}^2 - \Delta r_v{}^2} + \sqrt{\Delta r_{sh,i}{}^2 - \Delta r_v{}^2}$$

where x and y are a horizontal coordinate and a vertical coordinate of the position of the pedestrian respectively; n is the number of footsteps; $\Delta r_i$ is a step length of an ith footstep; $\theta_i$ is the travel direction measurement value of the ith footstep; $\Delta r_{fh,i}$ is a measurement value of the distance between the signal receiver and the signal emitter when the ith footstep begins; $\Delta r_{sh,i}$ is a measurement value of the distance between the signal receiver and the signal emitter when the ith footstep ends; $\Delta r_v$ is the distance between the two feet when the pedestrian is standing with the two feet parallel.

Preferably, in the method, the inertial measurement unit includes a first sub-unit and a second sub-unit, which are disposed on different lower limbs of the pedestrian, and the method determines a position of the pedestrian according to the following formulae:

$$x = \frac{x_r + x_l}{2}$$

$$y = \frac{y_r + y_l}{2}$$

$$x_r = \sum_{i=1}^{n} \Delta r_{r,i} * cos\theta_{r,i}$$

$$y_r = \sum_{i=1}^{n} \Delta r_{r,i} * sin\theta_{r,i}$$

$$x_l = \sum_{i=1}^{n} \Delta r_{l,i} * cos\theta_{l,i}$$

$$y_l = \sum_{i=1}^{n} \Delta r_i * sin\theta_{l,i}$$

$$\Delta r_{r,i} = \sqrt{\Delta r_{fh,r,i}{}^2 - \Delta r_v{}^2} + \sqrt{\Delta r_{sh,r,i}{}^2 - \Delta r_v{}^2}$$

$$\Delta r_{l,i} = \sqrt{\Delta r_{fh,l,i}{}^2 - \Delta r_v{}^2} + \sqrt{\Delta r_{sh,l,i}{}^2 - \Delta r_v{}^2}$$

where x and y are a horizontal coordinate and a vertical coordinate of the position of the pedestrian respectively; n is the number of footsteps; $\Delta r_{r,i}$ and $\Delta r_{l,i}$ are step lengths of ith footsteps of a right foot and a left foot respectively; $\theta_{r,i}$ is

the travel direction measurement value of the ith footstep provided by one of the first sub-unit and the second sub-unit; $\theta_{l,i}$ is the travel direction measurement value of the ith footstep provided by the other one of the first sub-unit and the second sub-unit; $\Delta r_{fh,r,i}$ is a measurement value of the distance between the signal receiver and the signal emitter when the ith footstep of the right foot begins; $\Delta r_{sh,r,i}$ is a measurement value of the distance between the signal receiver and the signal emitter when the ith footstep of the right foot ends; $\Delta r_{fh,l,i}$ is a measurement value of the distance between the signal receiver and the signal emitter when the ith footstep of the left foot begins; $\Delta r_{sh,l,i}$ is a measurement value of the distance between the signal receiver and the signal emitter when the ith footstep of the left foot ends; $\Delta r_v$ is the distance between the two feet when the pedestrian is standing with the two feet parallel.

Another object of the present invention is to provide an apparatus for determining pedestrian position, having advantages such as high precision, low implementation costs and high reliability.

An apparatus for determining pedestrian position according to one embodiment of the present invention includes:

a signal receiver and a signal emitter, which form a pair and are disposed on different lower limbs of a pedestrian, and are configured to provide a step length measurement value of one or more footsteps of the pedestrian;

an inertial measurement unit, configured to provide a travel direction measurement value of one or more footsteps of the pedestrian; and

a processor, configured to determine position information of the pedestrian from the step length measurement value and the travel direction measurement value.

Another object of the present invention is to provide a computer readable storage medium, which is capable of determining position information of a pedestrian at a low cost with high precision and high reliability.

A computer readable storage medium according to another aspect of the present invention, on which a computer program is stored, characterized in that when executed by a processor, the program realizes the method as described above.

Since the step length measurement value provided by the combination of the signal receiver and the signal emitter is far superior in terms of precision than a step length value measured by the inertial measurement unit, the method and apparatus according to the present invention increase the precision of position information. In addition, the technical solution of the present invention also shakes off dependence on a UWB positioning signal receiver.

Description of the accompanying drawings

The abovementioned and/or other aspects and advantages of the present invention will be made clearer and easier to understand by the following description of various aspects with reference to the accompanying drawings, in which identical or similar units are indicated by identical labels. The drawings comprise:

Fig. 1 is a schematic block diagram of an apparatus for determining pedestrian position according to an embodiment of the present invention.

Fig. 2 is a schematic block diagram of an apparatus for determining pedestrian position according to another embodiment of the present invention.

Fig. 3 is a flow chart of a method for determining pedestrian position information according to another embodiment of the present invention.

Figs. 4A and 4B are schematic diagrams of footsteps, showing the geometric relationship between various parameters.

Fig. 5 is a flow chart of a method for determining pedestrian position information according to another embodiment of the present invention.

Particular embodiments

The present invention is explained more comprehensively below with reference to the accompanying drawings, which show schematic embodiments of the present invention. However, the present invention may be realized in different forms, and should not be interpreted as being limited to the embodiments given herein. Said embodiments are intended to make the disclosure herein comprehensive and complete, and thereby enable a more comprehensive and accurate understanding of the scope of protection of the present invention.

Terms such as "includes" and "comprises" indicate that in addition to having the units and steps directly and explicitly expressed in the description and claims, the technical solution of the present invention does not rule out cases of having other units and steps which are not directly or explicitly expressed.

Terms such as "first" and "second" do not indicate the order of units in time, space or size, etc., being merely used to distinguish between units.

In this text, "position information" should be broadly interpreted as various types of position-related information, e.g. including but not limited to a position and walking track of a pedestrian, etc.

In the vast majority of cases, human walking is performed by the left and right legs alternately. In this text, a footstep means a single pace walked by a left foot or a right foot.

According to one aspect of the present invention, a step length measurement value of each footstep is provided by a signal receiver and a signal emitter, which form a pair and are disposed on different lower limbs of a pedestrian. During walking, the signal receiver and signal emitter disposed on different lower limbs will sense change in the distance therebetween; there is a high degree of correspondence between such a distance signal and a step length value of each footstep, hence the step length measurement value can be obtained therefrom. In addition, a travel direction measurement value of each footstep is provided by an inertial measurement unit. The step length measurement value and travel direction measurement value provided may be used to determine position information of the pedestrian.

The distance between the lower limbs of the pedestrian changes as the pedestrian walks in an alternating fashion; by cooperating with each other, the signal receiver and signal emitter can measure the step length value of each footstep. Since the distance moved by a foot within a plane is almost the distance walked by a person, according to another aspect of the present invention, the signal receiver and signal emitter are disposed on feet of the pedestrian (e.g. the signal receiver and signal emitter are disposed in ankle rings attached to the ankles, etc., or disposed at the bottom of shoes). However, it must be pointed out that other regions of the lower limbs are also feasible.

According to another aspect of the present invention, the inertial measurement unit includes a first sub-unit and a second sub-unit; these two sub-units are disposed on different lower limbs of the pedestrian (e.g. the feet), and each independently provide travel direction measurement values. Two sets of position information corresponding to the two travel direction measurement values can thereby be obtained. The precision of position information can be further increased by suitably combining the two sets of position information (e.g. by taking the arithmetic mean).

According to another aspect of the present invention, after acquiring the step length measurement value and travel direction measurement value of one footstep of the pedestrian, the displacement of this footstep can be determined, and a real-time movement track and position of the pedestrian can thereby be obtained; alternatively, after acquiring the step length measurement values and travel direction measurement values of multiple footsteps of the pedestrian, the displacements of these footsteps can be determined, and a history of position information of the pedestrian can thereby be obtained.

According to another aspect of the present invention, a step length measurement value and a travel direction measurement value of each footstep are both provided by an inertial measurement unit, and a step length measurement value provided by a signal receiver and a signal emitter, which form a pair and are disposed on different lower limbs of the pedestrian, is used to correct the step length measurement value obtained by the inertial measurement unit, thereby solving the drift problem.

Embodiments of the present invention are described in detail below with the aid of the accompanying drawings.

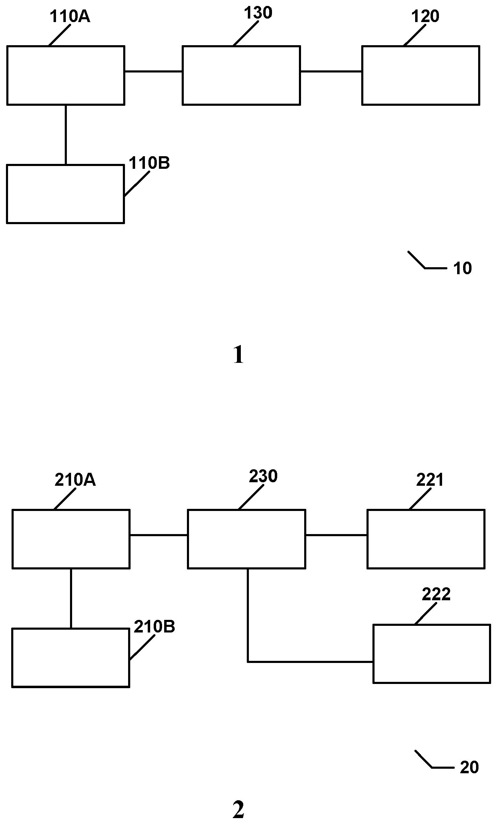

Fig. 1 is a schematic block diagram of an apparatus for determining pedestrian position according to an embodiment of the present invention. The apparatus 10 shown in fig. 1 comprises a signal receiver 110A and a signal emitter 110B forming a pair, an inertial measurement unit 120 and a processor 130.

In this embodiment, the signal receiver 110A and the signal emitter 110B are adapted to be disposed on different lower limbs of a pedestrian, being configured to cooperate in order to provide a step length measurement value of one or more footsteps of the pedestrian. The inertial measurement unit 120 is configured to provide a travel direction measurement value of one or more footsteps of the pedestrian. Preferably, the signal receiver 110A, signal emitter 110B and inertial measurement unit 120 are adapted to be disposed on feet of the pedestrian. More advantageously, the inertial measurement unit 120 may be integrated with one of the signal receiver 110A and the signal emitter 110B.

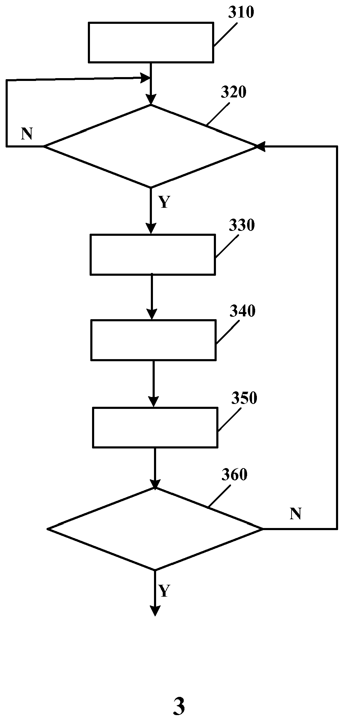

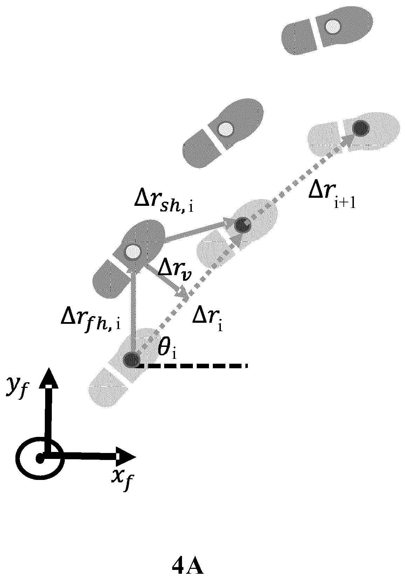

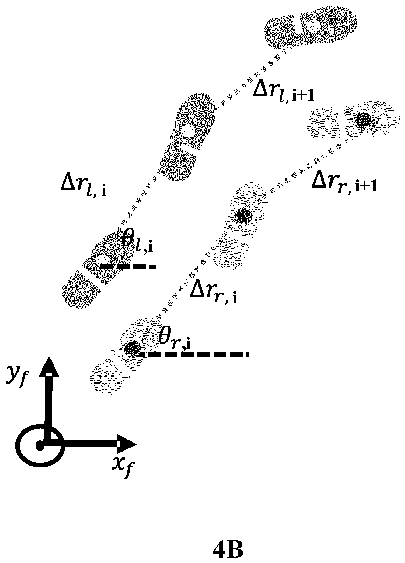

As shown in fig. 1, the processor 130 is coupled to the signal receiver 110A so as to receive the step length measurement value and is coupled to the inertial measurement unit 120 so as to receive the travel direction measurement value. The processor 130 is configured to determine position information of the pedestrian from the step length measurement value and the travel direction measurement value. A specific method for determining relevant position information will be described in detail below with reference to figs. 3 and 4.

Fig. 2 is a schematic block diagram of an apparatus for determining pedestrian position according to another embodiment of the present invention. The apparatus 20 shown in fig. 2 comprises a signal receiver 210A and a signal emitter 210B forming a pair, an inertial measurement unit 220 and a processor 230.

Compared with the embodiment shown in fig. 1, the main difference in this embodiment lies in the inertial measurement unit 220. Specifically, in this embodiment, the inertial measurement unit 220 includes a first sub-unit 221 and a second sub-unit 222, which are disposed on different lower limbs (e.g. the feet) of the pedestrian and each independently provide travel direction measurement values. Preferably, one of the first and second sub-units 221, 222 may be integrated with one of the signal receiver 210A and the signal emitter 210B, with the other one of the first and second sub-units 221, 222 being integrated with the other one of the signal receiver 210A and the signal emitter 210B.

As stated above, the step length measurement value is obtained from a relative distance signal of the signal receiver and the signal emitter, therefore in the embodiments shown in figs. 1 and 2, the measurement value is preferably provided to the processor by one of the signal receiver and the signal emitter.

It must also be pointed out that the processor in the embodiments shown in figs. 1 and 2 may be a processor specifically used for executing a position information determining function, but could also be a processor which also executes another function. Examples of the latter case include but are not limited to processors contained in electronic devices such as mobile phones, wristbands and smart wristwatches.

It must also be pointed out that the apparatuses 10 and 20 for determining pedestrian position might also comprise other units (e.g. a memory, display screen and wireless transceiver), but those skilled in the art will realize from the following description that the units mentioned above are sufficient to provide the function of determining pedestrian position information, so in order to avoid superfluous description, this embodiment does not describe other units.

Fig. 3 is a flow chart of a method for determining pedestrian position information according to another embodiment of the present invention. By way of example, the method of this embodiment is realized here using the apparatuses for determining pedestrian position information shown above with the aid of figs. 1 and 2. However, those skilled in the art will understand that the method shown in this embodiment is not limited to a physical apparatus having a specific structure.

The method shown in fig. 3 starts at step 310; in this step, the apparatus 10 or 20 for determining pedestrian position information enters a real-time operating mode. In this operating mode, the apparatus 10 or 20 for determining pedestrian position information will generate position information of the pedestrian in real time.

Next, the method enters step 320; the processor 130 or 230 determines whether a new step length measurement value from the signal receiver or signal emitter, and a new travel direction measurement value from the inertial measurement unit, are received (in the case of the embodiment shown in fig. 2, two travel direction measurement values will be received). If said values are received, the method enters step 330, otherwise waiting is continued.

In step 330, the new step length measurement value and travel direction measurement value are stored in an internal memory of the apparatus 10 or 20 for determining pedestrian position information and/or sent to an external device (e.g. a mobile phone or smart wristwatch). In this embodiment, step 330 is optional.

In step 340, the processor 130 or 230 calculates a displacement increment generated by a current footstep. Fig. 4A shows a schematic diagram of footsteps. In fig. 4A, suppose that the signal receiver and the signal emitter are disposed on the right foot and the left foot respectively (with the positions thereof being marked by the round dots), and the inertial measurement unit is disposed on the right foot. When the right foot moves upward from a bottommost position to a middle position, one footstep (an ith footstep) of walking is completed, and when the right foot moves upward from the middle position to a topmost position, the next footstep (an (i+1)th footstep) of walking is completed; and likewise for the left foot. As shown in fig. 4A, when the ith footstep begins, a measured distance between the signal receiver and the signal emitter is $\Delta r_{fh,i}$, and when this footstep ends, a measured distance between the signal receiver and the signal emitter will change to $\Delta r_{sh,i}$. Based on the geometric relationship shown in fig. 4A, the processor may calculate the displacement increment generated by the current footstep according to the following formulae:

$$（1） \qquad x_i = \Delta r_i * cos\theta_i$$

$$（2） \qquad y_i = \Delta r_i * sin\theta_i$$

$$（3） \quad \Delta r_i = \sqrt{\Delta r_{fh,i}{}^2 - \Delta r_v{}^2} + \sqrt{\Delta r_{sh,i}{}^2 - \Delta r_v{}^2}$$

Here, $x_i$ and $y_i$ are displacement increments along the horizontal and vertical axes respectively, generated by the ith footstep (the current footstep) of the pedestrian; $\Delta r_i$ is the step length of the ith footstep; $\theta_i$ is the travel direction measurement value of the ith footstep; $\Delta r_{fh,i}$ is a measurement value of the distance between the signal receiver and the signal emitter when the ith footstep begins; $\Delta r_{sh,i}$ is a measurement value of the distance between the signal receiver and the signal emitter when the ith footstep ends; $\Delta r_v$ is the distance between the two feet when the pedestrian is standing with the two feet parallel.

Formulae (1) - (3) above apply to the scenario where the inertial measurement unit only provides one travel direction measurement value.

Fig. 4B shows a schematic diagram of footsteps. In fig. 4B, suppose that the signal receiver and the signal emitter are still disposed on the right foot and the left foot respectively (with the positions thereof being marked by the round dots), but the inertial measurement unit includes first and second sub-units, which are disposed on the left foot and the right foot respectively. In the case where the inertial measurement unit provides two travel direction measurement values, the processor calculates the displacement increment generated by the current footstep according to the following formulae:

$$(4) \qquad x_i = \frac{x_{r,i} + x_{l,i}}{2}$$

$$(5) \qquad y_i = \frac{y_{r,i} + y_{l,i}}{2}$$

$$(6) \qquad x_{r,i} = \Delta r_{r,i} * cos\theta_{r,i}$$

$$(7) \qquad y_{r,i} = \Delta r_{r,i} * sin\theta_{r,i}$$

$$(8) \qquad \Delta r_{r,i} = \sqrt{\Delta r_{fh,r,i}^2 - \Delta r_v^2} + \sqrt{\Delta r_{sh,r,i}^2 - \Delta r_v^2}$$

$$(9) \qquad \Delta r_{l,i} = \sqrt{\Delta r_{fh,l,i}^2 - \Delta r_v^2} + \sqrt{\Delta r_{sh,l,i}^2 - \Delta r_v^2}$$

Here, $x_i$ and $y_i$ are displacement increments along the horizontal and vertical axes respectively, generated by an ith footstep (the current footstep) of the pedestrian; $\Delta r_{r,i}$ and $\Delta r_{l,i}$ are the step lengths of the ith footsteps of the right foot and the left foot respectively; $\theta_{r,i}$ is the travel direction measurement value of the ith footstep provided by one of the first sub-unit and the second sub-unit; $\theta_{l,i}$ is the travel direction measurement value of the ith footstep provided by the other one of the first sub-unit and the second sub-unit; $\Delta r_{fh,r,i}$ is a measurement value of the distance between the signal receiver and the signal emitter when the ith footstep of the right foot begins; $\Delta r_{sh,r,i}$ is a measurement value of the distance between the signal receiver and the signal emitter when the ith footstep of the right foot ends; $\Delta r_{fh,l,i}$ is a measurement value of the distance between the signal receiver and the signal emitter when the ith footstep of the left foot begins; $\Delta r_{sh,l,i}$ is a measurement value of the distance between the signal receiver and the signal emitter when the ith footstep of the left foot ends; $\Delta r_v$ is the distance between the two feet when the pedestrian is standing with the two feet parallel.

Preferably, $\Delta r_{r,i}$ and $\Delta r_{l,i}$ may be chosen to have the same value, hence the value of just one of $\Delta r_{r,i}$ and $\Delta r_{l,i}$ may be calculated according to formula (8) or (9).

Step 350 is entered after step 340 is performed: the apparatus 10 or 20 for determining pedestrian position information outputs the calculated displacement increment generated by the current footstep to an external device (e.g. a mobile phone or smart wristwatch), or draws a movement track and/or current position of the pedestrian on an internal presentation unit (e.g. a display screen) thereof.

Step 360 is then entered: the apparatus 10 or 20 for determining pedestrian position information determines whether an instruction to exit the real-time operating mode is received, and if such an instruction is received, exits the work flow, otherwise returning to step 320.

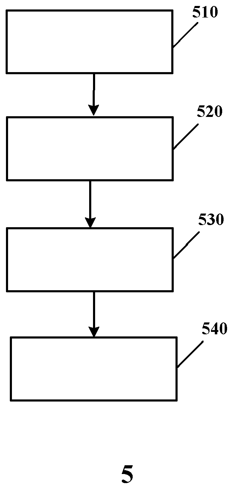

Fig. 5 is a flow chart of a method for determining pedestrian position information according to another embodiment of the present invention. By way of example, the method of this embodiment is realized here using the apparatuses for determining pedestrian position information shown above with the aid of figs. 1 and 2. However, those skilled in the art will understand that the method shown in this embodiment is not limited to a physical apparatus having a specific structure.

The method shown in fig. 5 starts at step 510; in this step, the apparatus 10 or 20 for determining pedestrian position information enters a non-real-time operating mode. In this operating mode, the apparatus 10 or 20 for determining pedestrian position information will determine a movement track history or current position of the pedestrian on the basis of historical data of step length measurement values and travel direction measurement values of the pedestrian.

Step 520 is then entered: the apparatus 10 or 20 for determining pedestrian position information calls historical data of measurement values of the pedestrian from an internal memory or an external device. Preferably, the historical data may carry time stamps to facilitate the calling of measurement values within a set time period.

Step 530 is then entered. In step 530, the processor 130 or 230 calculates the current position of the pedestrian. In the case where the inertial measurement unit only provides one travel direction measurement value, the processor calculates the current position according to the following formulae:

$$（10） \quad x = \sum_{i=1}^{n} \Delta r_i * cos\theta_i$$

$$（11） \quad y = \sum_{i=1}^{n} \Delta r_i * sin\theta_i$$

$$（12） \quad \Delta r_i = \sqrt{\Delta r_{fh,i}{}^2 - \Delta r_v{}^2} + \sqrt{\Delta r_{sh,i}{}^2 - \Delta r_v{}^2}$$

Here, x and y are a horizontal coordinate and a vertical coordinate of the current position of the pedestrian respectively; n is the number of footsteps; $\Delta r_i$ is the step length of the ith footstep; $\theta_i$ is the travel direction measurement value of the ith footstep; $\Delta r_{fh,i}$ is a measurement value of the distance between the signal receiver and the signal emitter when the ith footstep begins; $\Delta r_{sh,i}$ is a measurement value of the distance between the signal receiver and the signal emitter when the ith footstep ends; $\Delta r_v$ is the distance between the two feet when the pedestrian is standing with the two feet parallel.

In the case where the inertial measurement unit provides two travel direction measurement values, the processor calculates the current position according to the following formulae:

$$（13） \quad x = \frac{x_r + x_l}{2}$$

$$（14） \quad y = \frac{y_r + y_l}{2}$$

$$（15） \quad x_r = \sum_{i=1}^{n} \Delta r_{r,i} * cos\theta_{r,i}$$

$$（16） \quad y_r = \sum_{i=1}^{n} \Delta r_{r,i} * sin\theta_{r,i}$$

$$(17) \qquad x_l = \sum_{i=1}^{n} \Delta r_{l,i} * cos\theta_{l,i}$$

$$(18) \qquad y_l = \sum_{i=1}^{n} \Delta r_i * sin\theta_{l,i}$$

$$(19) \qquad \Delta r_{r,i} = \sqrt{\Delta r_{fh,r,i}^{2} - \Delta r_v^{2}} + \sqrt{\Delta r_{sh,r,i}^{2} - \Delta r_v^{2}}$$

$$(20) \qquad \Delta r_{l,i} = \sqrt{\Delta r_{fh,l,i}^{2} - \Delta r_v^{2}} + \sqrt{\Delta r_{sh,l,i}^{2} - \Delta r_v^{2}}$$

Here, x and y are a horizontal coordinate and a vertical coordinate of a position of the pedestrian respectively; n is the number of footsteps; $\Delta r_{r,i}$ and $\Delta r_{l,i}$ are the step lengths of the ith footsteps of the right foot and the left foot respectively; $\theta_{r,i}$ is the travel direction measurement value of the ith footstep provided by one of the first sub-unit and the second sub-unit; $\theta_{l,i}$ is the travel direction measurement value of the ith footstep provided by the other one of the first sub-unit and the second sub-unit; $\Delta r_{fh,r,i}$ is a measurement value of the distance between the signal receiver and the signal emitter when the ith footstep of the right foot begins; $\Delta r_{sh,r,i}$ is a measurement value of the distance between the signal receiver and the signal emitter when the ith footstep of the right foot ends; $\Delta r_{fh,l,i}$ is a measurement value of the distance between the signal receiver and the signal emitter when the ith footstep of the left foot begins; $\Delta r_{sh,l,i}$ is a measurement value of the distance between the signal receiver and the signal emitter when the ith footstep of the left foot ends; $\Delta r_v$ is the distance between the two feet when the pedestrian is standing with the two feet parallel.

Preferably, $\Delta r_{r,i}$ and $\Delta r_{l,i}$ may be chosen to have the same value, hence the value of just one of $\Delta r_{r,i}$ and $\Delta r_{l,i}$ may be calculated according to formula (19) or (20).

It must be pointed out that in step 530, the calculated current position of the pedestrian takes an initial position (i.e. the position of the pedestrian before the first footstep) as a reference, but this is merely demonstrative, not necessary.

Step 540 is entered after step 530 is performed: the apparatus 10 or 20 for determining pedestrian position information outputs the calculated position information to an external device (e.g. a mobile phone or smart wristwatch), or draws position information on an internal presentation unit (e.g. a display screen) thereof.

According to another aspect of the present invention, also provided is a computer readable storage medium, on which a computer program is stored; when executed by a processor, the program can realize the method for determining pedestrian position information described above with the aid of figs. 3 and 4.

Although some aspects of the present invention have already been displayed and discussed, those skilled in the art should realize that the abovementioned aspects could be changed on condition that the principles and spirit of the present invention are not departed from, therefore the scope of the present invention will be defined by the claims and equivalent content.

**Claims**

1. Method for determining pedestrian position information, **characterized by** including the following steps:

   acquiring a step length measurement value and a travel direction measurement value of one or more footsteps of a pedestrian; and
   determining position information of the pedestrian from the step length measurement value and the travel direction measurement value,

wherein the step length measurement value of each footstep is provided by a signal receiver and a signal emitter, which form a pair and are disposed on different lower limbs of the pedestrian, and the travel direction measurement value is provided by an inertial measurement unit.

2. Method according to Claim 1, wherein the signal receiver, the signal emitter and the inertial measurement unit are disposed on feet of the pedestrian.

3. Method according to Claim 1, wherein the position information comprises a position and/or a walking track of the pedestrian.

4. Method according to Claim 1, wherein a position of the pedestrian is determined according to the following formulae:

$$x = \sum_{i=1}^{n} \Delta r_i * cos\theta_i$$

$$y = \sum_{i=1}^{n} \Delta r_i * sin\theta_i$$

$$\Delta r_i = \sqrt{\Delta r_{fh,i}^2 - \Delta r_v^2} + \sqrt{\Delta r_{sh,i}^2 - \Delta r_v^2}$$

where x and y are a horizontal coordinate and a vertical coordinate of the position of the pedestrian respectively; n is the number of footsteps; $\Delta r_i$ is a step length of an ith footstep; $\theta_i$ is the travel direction measurement value of the ith footstep; $\Delta r_{fh,i}$ is a measurement value of the distance between the signal receiver and the signal emitter when the ith footstep begins; $\Delta r_{sh,i}$ is a measurement value of the distance between the signal receiver and the signal emitter when the ith footstep ends; $\Delta r_v$ is the distance between the two feet when the pedestrian is standing with the two feet parallel.

5. Method according to Claim 1, wherein the inertial measurement unit includes a first sub-unit and a second sub-unit, which are disposed on different lower limbs of the pedestrian, and the method determines a position of the pedestrian according to the following formulae:

$$x = \frac{x_r + x_l}{2}$$

$$y = \frac{y_r + y_l}{2}$$

$$x_r = \sum_{i=1}^{n} \Delta r_{r,i} * cos\theta_{r,i}$$

$$y_r = \sum_{i=1}^{n} \Delta r_{r,i} * sin\theta_{r,i}$$

$$x_l = \sum_{i=1}^{n} \Delta r_{l,i} * cos\theta_{l,i}$$

$$y_l = \sum_{i=1}^{n} \Delta r_i * sin\theta_{l,i}$$

$$\Delta r_{r,i} = \sqrt{\Delta r_{fh,r,i}^2 - \Delta r_v^2} + \sqrt{\Delta r_{sh,r,i}^2 - \Delta r_v^2}$$

$$\Delta r_{l,i} = \sqrt{\Delta r_{fh,l,i}^2 - \Delta r_v^2} + \sqrt{\Delta r_{sh,l,i}^2 - \Delta r_v^2}$$

where x and y are a horizontal coordinate and a vertical coordinate of the position of the pedestrian respectively; n is the number of footsteps; $\Delta r_{r,i}$ and $\Delta r_{l,i}$ are step lengths of ith footsteps of a right foot and a left foot respectively; $\theta_{r,i}$ is the travel direction measurement value of the ith footstep provided by one of the first sub-unit and the second sub-unit; $\theta_{l,i}$ is the travel direction measurement value of the ith footstep provided by the other one of the first sub-unit and the second sub-unit; $\Delta r_{fh,r,i}$ is a measurement value of the distance between the signal receiver and the signal emitter when the ith footstep of the right foot begins; $\Delta r_{sh,r,i}$ is a measurement value of the distance between the signal receiver and the signal emitter when the ith footstep of the right foot ends; $\Delta r_{fh,l,i}$ is a measurement value of the distance between the signal receiver and the signal emitter when the ith footstep of the left foot begins; $\Delta r_{sh,l,i}$ is a measurement value of the distance between the signal receiver and the signal emitter when the ith footstep of the left foot ends; $\Delta r_v$ is the distance between the two feet when the pedestrian is standing with the two feet parallel.

6. Apparatus for determining pedestrian position, **characterized by** including:

   a signal receiver and a signal emitter, which form a pair and are disposed on different lower limbs of a pedestrian, and are configured to provide a step length measurement value of one or more footsteps of the pedestrian; an inertial measurement unit, configured to provide a travel direction measurement value of one or more footsteps of the pedestrian; and a processor, configured to determine position information of the pedestrian from the step length measurement value and the travel direction measurement value.

7. Apparatus according to Claim 6, wherein the signal receiver, the signal emitter and the inertial measurement unit are adapted to be disposed on feet of the pedestrian.

8. Apparatus according to Claim 6, wherein the inertial measurement unit is integrated with the signal receiver or the signal emitter.

9. Apparatus according to Claim 6, wherein the position information comprises a position and/or a walking track of the pedestrian.

10. Apparatus according to Claim 6, wherein the processor determines a position of the pedestrian according to the following formulae:

$$x = \sum_{i=1}^{n} \Delta r_i * cos\theta_i$$

$$y = \sum_{i=1}^{n} \Delta r_i * sin\theta_i$$

$$\Delta r_i = \sqrt{\Delta r_{fh,i}^2 - \Delta r_v^2} + \sqrt{\Delta r_{sh,i}^2 - \Delta r_v^2}$$

where x and y are a horizontal coordinate and a vertical coordinate or the position of the pedestrian respectively; n is the number of footsteps; $\Delta r_i$ is a step length of an ith footstep; $\theta_i$ is the travel direction measurement value of the ith footstep; $\Delta r_{fh,i}$ is a measurement value of the distance between the signal receiver and the signal emitter when the ith footstep begins; $\Delta r_{sh,i}$ is a measurement value of the distance between the signal receiver and the signal emitter when the ith footstep ends; $\Delta r_v$ is the distance between the two feet when the pedestrian is standing with the two feet parallel.

11. Apparatus according to Claim 6, wherein the inertial measurement unit includes a first sub-unit and a second sub-unit, which are disposed on different lower limbs of the pedestrian, and the processor determines a position of the pedestrian according to the following formulae:

$$x = \frac{x_r + x_l}{2}$$

$$y = \frac{y_r + y_l}{2}$$

$$x_r = \sum_{i=1}^{n} \Delta r_{r,i} * cos\theta_{r,i}$$

$$y_r = \sum_{i=1}^{n} \Delta r_{r,i} * sin\theta_{r,i}$$

$$x_l = \sum_{i=1}^{n} \Delta r_{l,i} * cos\theta_{l,i}$$

$$y_l = \sum_{i=1}^{n} \Delta r_i * sin\theta_{l,i}$$

$$\Delta r_{r,i} = \sqrt{\Delta r_{fh,r,i}^2 - \Delta r_v^2} + \sqrt{\Delta r_{sh,r,i}^2 - \Delta r_v^2}$$

$$\Delta r_{l,i} = \sqrt{\Delta r_{fh,l,i}^2 - \Delta r_v^2} + \sqrt{\Delta r_{sh,l,i}^2 - \Delta r_v^2}$$

where x and y are a horizontal coordinate and a vertical coordinate of the position of the pedestrian respectively; n is the number of footsteps; $\Delta r_{r,i}$ and $\Delta r_{l,i}$ are step lengths of ith footsteps of a right foot and a left foot respectively; $\theta_{r,i}$ is the travel direction measurement value of the ith footstep provided by one of the first sub-unit and the second sub-unit; $\theta_{l,i}$ is the travel direction measurement value of the ith footstep provided by the other one of the first sub-unit and the second sub-unit; $\Delta r_{fh,r,i}$ is a measurement value of the distance between the signal receiver and the signal emitter when the ith footstep of the right foot begins; $\Delta r_{sh,r,i}$ is a measurement value of the distance between the signal receiver and the signal emitter when the ith footstep of the right foot ends; $\Delta r_{fh,l,i}$ is a measurement value of the distance between the signal receiver and the signal emitter when the ith footstep of the left foot begins; $\Delta r_{sh,l,i}$ is a measurement value of the distance between the signal receiver and the signal emitter when the ith footstep of the left foot ends; $\Delta r_v$ is the distance between the two feet when the pedestrian is standing with the two feet parallel.

**12.** Computer readable storage medium, on which a computer program is stored, **characterized in that** when executed by a processor, the program realizes the method according to any one of Claims 1 - 5.

110A     130     120

110B

10

1

210A     230     221

210B

222

20

2

3

**4A**

**4B**

510

520

530

540

5

Europäisches
Patentamt

European
Patent Office

Office européen
des brevets

# EUROPEAN SEARCH REPORT

Application Number

EP 18 18 1797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 8 972 182 B1 (FOXLIN ERIC [US])<br>3 March 2015 (2015-03-03)<br>* column 2, lines 7-10 *<br>* column 1, lines 53-55 *<br>* column 3, lines 6-22, 54-64 *<br>* column 4, lines 43-56 *<br>* column 7, line 51 - column 8, line 2 *<br>* figure 1 *<br>* claim 18 *<br>----- | 1-3,6-9,<br>12<br>4,5,10,<br>11 | INV.<br>G01C21/20 |
| X | EP 2 040 036 A2 (HONEYWELL INT INC [US])<br>25 March 2009 (2009-03-25)<br>* paragraphs [0011], [0012], [0015],<br>[0019], [0022], [0025], [0028] -<br>[0030], [0033], [0035] *<br>* figures 2-5 *<br>----- | 1-12 | |

TECHNICAL FIELDS
SEARCHED      (IPC)

G01S
G01C

The present search report has been drawn up for all claims

| Place of search | Date of completion of the search | Examiner |
|---|---|---|
| The Hague | 20 December 2018 | Nikoli, Revekka |

EPO FORM 1503 03.82 (P04C01)

## ANNEX TO THE EUROPEAN SEARCH REPORT
## ON EUROPEAN PATENT APPLICATION NO.

EP 18 18 1797

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2018

| Patent document cited in search report | | Publication date | Patent family member(s) | | Publication date |
|---|---|---|---|---|---|
| US 8972182 | B1 | 03-03-2015 | NONE | | |
| EP 2040036 | A2 | 25-03-2009 | EP 2040036 | A2 | 25-03-2009 |
| | | | US 2009326795 | A1 | 31-12-2009 |
| | | | US 2012059583 | A1 | 08-03-2012 |

EPO FORM P0459

For more details about this annex : see Official Journal of the European Patent Office, No. 12/82